Europäisches Patentamt

European Patent Office

Office européen des brevets

(11) Veröffentlichungsnummer: **0 074 433**
**B1**

(12) **EUROPÄISCHE PATENTSCHRIFT**

(45) Veröffentlichungstag der Patentschrift:
**03.07.85**

(51) Int. Cl.⁴: **B 23 D 61/18**

(21) Anmeldenummer: **81110383.7**

(22) Anmeldetag: **12.12.81**

(54) Endlose Seilsäge zum Schneiden von Kunststoff, insbesondere als Schaumstoff.

(30) Priorität: **20.08.81 EP 81106463**

(43) Veröffentlichungstag der Anmeldung:
**23.03.83 Patentblatt 83/12**

(45) Bekanntmachung des Hinweises auf die Patenterteilung:
**03.07.85 Patentblatt 85/27**

(84) Benannte Vertragsstaaten:
**AT BE CH DE FR GB IT LI NL SE**

(56) Entgegenhaltungen:
**DE - A - 1 427 778**
**DE - A - 2 517 496**
**US - A - 1 687 089**
**US - A - 2 451 383**
**US - A - 2 604 883**

(73) Patentinhaber: **Albrecht Bäumer KG
Spezialmaschinenfabrik, Asdorfer Strasse 96-106,
D-5905 Freudenberg (DE)**

(72) Erfinder: **Pötzsch, Rolf, Am Aspenwald 16,
D-5905 Freudenberg (DE)**

(74) Vertreter: **Blumbach Weser Bergen Kramer Zwirner
Hoffmann Patentanwälte, Sonnenbergerstrasse 43,
D-6200 Wiesbaden 1 (DE)**

## Beschreibung

Die Erfindung bezieht sich auf eine endlose Seilsäge zum Schneiden von Kunststoff, insbesondere als Schaumstoff, mit einem biegsamen, endlosen Seil als Kern und mit einer Wendel als schneidendem Element, die einen schraubenförmig um den Kern gelegten Draht enthält.

Ein derartiges Werkzeug in Form eines Sägedrahtes ist aus der deutschen Auslegeschrift Nr. 1058726 bekannt. Der Kern wird in Form einer endlosen Schleife durch Verschweissen der Drahtenden gefertigt, wobei der Kern ein einzelner Draht oder ein Drahtseil sein kann. Als schneidendes Element wird ein Zahnprofildraht auf den Kerndraht gewickelt und durch Löten fest mit diesem verbunden. Von Nachteil ist es, dass der Draht in der Nähe der stumpf miteinander verschweissten Drahtenden zur Brüchigkeit neigt, d. h. seine Wechselbiegefestigkeit herabgesetzt ist. Ferner ist die Befestigung eines Zahnprofildrahtes auf einem Drahtseil durch Löten problematisch. Besonders dünne Werkzeuge können nicht hergestellt werden, weil Zahnprofildraht nicht in sehr kleinen Querschnitten erhältlich ist.

Bei einem weiteren bekannten, aus Draht bestehenden, biegsamen Werkzeug (deutsche Patentschrift Nr. 2400204) wird ein Ringkörper durch mehrere dicht beieinander liegende und in dieser Lage gesicherte Windungen gebildet, und dieser Kern ist von einem Draht wendelförmig umgeben. Wenn bei diesem Werkzeug der Draht in einer der Windungen des Ringkörpers bricht, verliert das Werkzeug seine Zugfestigkeit, da die Reibung zwischen den benachbarten Drahtwindungen gering ist. Wenn aber die Windungen mit Hilfe eines Klebers in ihrer Lage gesichert werden, leidet die Biegsamkeit des Werkzeugs darunter. Schwierigkeiten macht ferner die Befestigung des äusseren, den Kern wendelförmig umgebenden Drahtes, da an diesem die Schneidkräfte auftreten und auf den Kern übertragen werden müssen.

Bei einer weiteren bekannten endlosen Seilsäge (deutsche Offenlegungsschrift Nr. 2517496) ist der Kern als endloses Seil gefertigt, wobei eine anfängliche Schlaufe und der Vorratsdraht entgegen dem üblichen Seilherstellungsverfahren so miteinander verseilt werden, dass die Seiloberfläche Unregelmässigkeiten zeigt. Wenn diese Unregelmässigkeiten erhaben sind, bildet ein um den Kern enggewickelter Draht krampfaderförmige Schneidstellen. Um den erhabenen Unregelmässigkeiten des Kernseils ein gewisses Ausmass zu erteilen, ist es notwendig, die Anzahl der Drähte in einem Seilquerschnitt gering zu halten (das Seil besteht an sich aus einem Draht, der mehrfach in der Seilschlaufe verseilt ist). Im Hinblick auf die erforderliche Zugfestigkeit des Werkzeugs kann deshalb eine gewisse Drahtdicke nicht unterschritten werden, ohne dass der Schneideffekt leiden würde.

Bei der Herstellung eines biegsamen Schneidwerkzeugs ist es bekannt (deutsche Patentschrift Nr. 1078850), einen Draht mit Schneidkante aus Werkzeugstahl zuerst zu einer Wendel auf einem vorläufigen Träger aufzuwickeln und mit der Schneidkante zu versehen, sodann die Wendel vor oder nach dem Härten von dem Träger abzuziehen und danach die gehärtete Wendel auf den biegsamen Träger aufzuschieben. Dabei ist es bekannt, die Enden des Kerndrahtes so zu verwinden, dass sie zwischen die Windungen des Wendeldrahtes passen. Das hergestellte Schneidwerkzeug ist relativ dick, einmal um die erforderliche Zugfestigkeit in einer Sägemaschine für Kunststoff aufzubringen, zum anderen wegen der abziehbaren Wendel. Dadurch wird aber bei einem Schnitt sehr viel Kunststoffmaterial zerspant und in Staubform übergeführt.

Weiterhin ist aus der amerikanischen Patentschrift Nr. 2451383 eine Seilsäge bekannt, welche aus einem von Drähten verschiedener Dicke geformten Drahtseil besteht.

Der Erfindung liegt die Aufgabe zugrunde, eine endlose Seilsäge der eingangs angegebenen Art so auszubilden, dass die Menge des beim Schnitt erzeugten Kunststoffstaubes relativ gering bleibt.

Die gestellte Aufgabe wird aufgrund der Massnahmen des Hauptanspruches gelöst.

Aufgrund der vorgeschlagenen Massnahmen ist es möglich, besonders dünne Drähte bei der Herstellung des Ringkörpers zu verwenden, so dass dessen Querschnitt in Anbetracht der erforderlichen Zugfestigkeit klein bleibt und damit auch die Schnittbreite. Je dünner das Werkzeug, umso weniger Staubanfall. Bei der erfindungsgemässen endlosen Seilsäge sind ferner die schraubenförmig verlaufenden Lücken zwischen den Schneidelementen relativ breit, so dass der zerspante, staubförmige Kunststoff vom Schnittbereich der Säge in die Zone benachbart dem ausgeführten Schnitt gelangen kann.

In Anpassung an den zu schneidenden Kunststoff bzw. Kunststoffschaum werden die schraubenförmig verlaufenden Lücken mehr oder weniger breit gemacht, indem ein oder mehrere dünnere Drähte nebeneinander zur Bildung der Lücke verwendet werden. Zur Beeinflussung des Schnittverhaltens können auch ein oder mehrere dickere Drähte nebeneinander verwendet werden.

Drei Ausführungsbeispiele der Erfindung werden anhand der Zeichnung beschrieben. Dabei zeigt:

Fig. 1 einen Längsschnitt durch ein Stück der Seilsäge nach dem ersten Ausführungsbeispiel,

Fig. 2 nach dem zweiten Ausführungsbeispiel, und

Fig. 3 nach dem dritten Ausführungsbeispiel.

Die endlose Seilsäge enthält einen biegsamen endlosen Ringkörper, der vorzugsweise aus einem Seil 1 besteht. Zur Herstellung eines endlosen Seils 1 kann man von Runddraht ausgehen, der zu einer Drahtschleife 2 gelegt wird und dessen eines Drahtende 2a an den fortlaufenden Draht z. B. mittels Lot 9 angeheftet wird, und benutzt die Drahtschleife 2 als Seilseele. Der fortlaufende Runddraht wird in mehreren Umläufen um diese Schleife 2 unregelmässig verseilt, so dass im Seilquerschnitt äussere Drähte 3 bis 8 vorhanden sind. Die Unregelmässigkeiten der Verseilung werden dadurch erzeugt, dass keine Verseildüse bei der Herstellung verwendet wird und dass gegebenenfalls der Seilschlag (die Steigung der Drähte 2 bis 8) variiert wird. Die Zugfestigkeit des Seils 1 bestimmt sich nach dem Querschnitt aller Drähte 2 bis 8 im Seilquerschnitt, obzwar das Seil 1 insgesamt nur den einzigen fortlaufenden Runddraht umfasst.

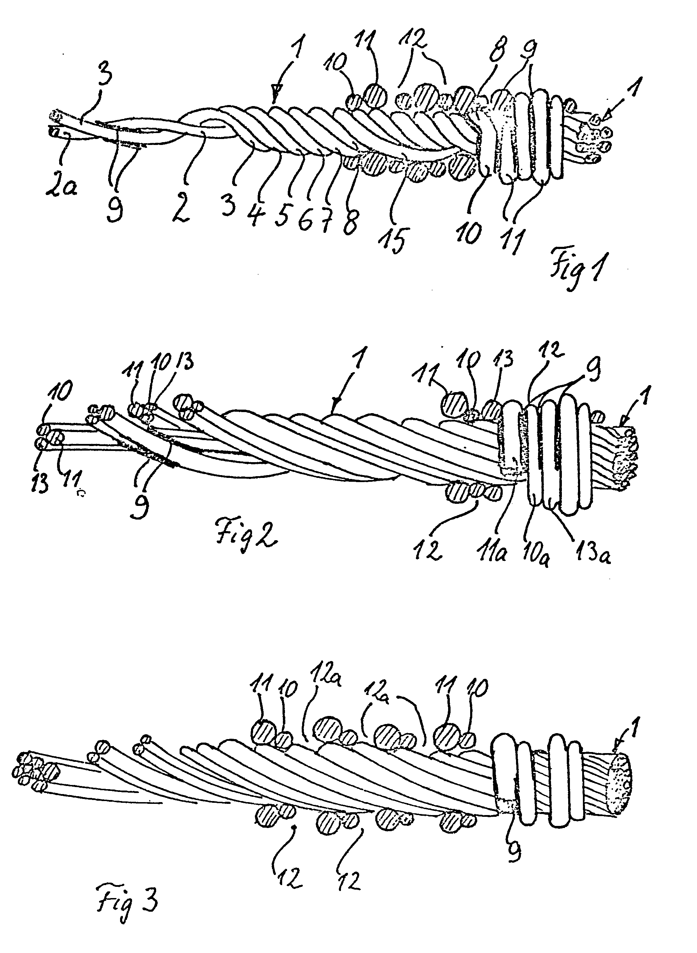

Das Ende dieses einzigen fortlaufenden Runddrahtes kann in das Seil 1 eingeflochten sein, es ist aber auch möglich, den gleichen fortlaufenden Runddraht 8 zum Umwickeln des endlosen Seils 1 zu verwenden. Hierzu wird der äussere Draht 8 am Umfang des Seils 1 z. B. mittels Lot 9 angeheftet, desgleichen ein neuer, dickerer Runddraht 11, und diese Drähte werden als dünner Draht 10 und dickerer Draht 11 zum Umwickeln des Seils 1 verwendet. Die Unregelmässigkeiten bei der Seilherstellung machen sich in Überkreuzungsstellen 15 der Drähte bemerkbar, so dass die äussere Wickellage mit den Drähten 10, 11 krampfaderförmige Auswüchse zeigt, welche die eigentlichen Schneidstellen der Säge bilden. (Ein äusserlich ebenmässiges Seil, auch umwickelt, hat nur einen geringen Schneideffekt.) Die Drähte 10, 11 berühren einander paarweise, und es hat sich herausgestellt, dass der dünnere Draht 10 den dickeren Draht 11 abstützt, wenn dieser vom Schneiddraht belastet wird. Zwischen den Schraubwindungen des dickeren Drahtes 11 verbleibt eine schraubenförmig verlaufende Spanabführnut 12, wenn man den äusseren Umriss der Schraubwindungen miteinander verbindet. Die Breite der Spanabfuhrnut 12 wird in Fig. 1 durch den Durchmesser des dünneren Drahtes 10 bestimmt. Die dickeren Drähte 11 stehen in Umlaufrichtung der Säge, welche der Axialrichtung des Seils 1 entspricht, vor und bilden die schneidenden Elemente. Infolge ihrer gegenseitigen Stützung und begünstigt durch die lückenlose Anordnung auf dem endlosen Seil 1 benötigen die Drähte 10, 11 keine besondere Befestigung am Seil 1, wenn man davon absieht, dass die freien Enden in das Seil 1 eingeflochten und/oder angelötet sind.

Der verwendete Draht besteht aus hochfestem Stahl und besitzt einen runden Querschnitt von 0,05 bis 0,3 mm Durchmesser. Ein bevorzugter Bereich liegt zwischen 0,08 und 0,18 mm Durchmesser. Durch passende Wahl der Durchmesser des dickeren und dünneren Drahtes 10, 11 kann den unterschiedlichen zu schneidenden Materialien Rechnung getragen werden. So werden für Weichschaum 0,1 und 0,12 mm ∅, halbfesten Schaum 0,1 und 0,15 mm ∅, Hartschaum 0,12 und 0,18 mm ∅ bevorzugt. Eine weitere Anpassung an das zu schneidende Material kann durch die Anzahl der Umläufe und damit der Drähte 2 bis 8 im Seilquerschnitt sowie des Ausmasses der Unregelmässigkeit der Verseilung erzielt werden. Es kommen 10 bis 40 Drähte im Seilquerschnitt in Betracht. Ein bevorzugter Bereich liegt zwischen 15 und 30 Drähten pro Seilquerschnitt. Der Seilquerschnitt beträgt 0,3 bis 2 mm, der bevorzugte Bereich 0,5 bis 0,8 mm.

In Abwandlung zum beschriebenen Ausführungsbeispiel kann man statt einer einheitlichen Sorte Draht auch den dickeren und dünneren Draht bei der Herstellung des endlosen Kernseils 1 benutzen. In diesem Fall umfasst die anfängliche Drahtschleife zwei Drähte, und es wird bei jedem Umlauf mit den beiden Drähten verseilt. Wenn das endlose Seil hergestellt ist, werden die fortlaufenden Drähte mit Lot angeheftet, und es wird auf Wickeln mit enger Steigung übergegangen.

Beim Ausführungsbeispiel gemäss Fig. 2 werden drei Drahtsorten 10, 11, 13 benutzt. Zur Befestigung der Enden der Drähte 10, 11 bzw. 13 werden diese in das endlose Seil 1 eingeflochten und/oder angelötet, wie bei 10a, 11a und 13a dargestellt. Der weitere dünnere Draht 13 führt zur Verbreiterung der schraubenförmigen Spanabfuhrnut 12. Im vorliegenden Fall beträgt der Durchmesser des Drahtes 13 0,12 mm; es kann natürlich auch Draht mit dem gleichen Durchmesser verwendet werden wie der Draht 10. Das Ausführungsbeispiel nach Fig. 2 zeigt eine verbesserte Spanabfuhr gegenüber dem Ausführungsbeispiel nach Fig. 1 und ein unterschiedliches Schnittverhalten je nach der Umlaufrichtung der drahtförmigen Säge.

Um zu unterschiedlichem Schnittverhalten der Säge zu gelangen, ist es im übrigen ferner möglich, die dickeren Drähte 10 und die dünneren Drähte 11 bzw. 13 gruppenweise nebeneinander zu wickeln. Wenn beispielsweise zwei der dickeren Drähte 11 nebeneinander verwendet werden, reduziert sich die Anzahl der Schnittstellen, was auf den ersten Blick gesehen nachteilig zu sein scheint. Im Hinblick auf die erwünschte hohe Umlaufgeschwindigkeit der drahtförmigen Säge und den nicht allzu gross gewählten Vorschub des zu schneidenden Schaumstoffblocks kann es aber im Hinblick auf die Staubentwicklung günstiger sein, die Anzahl der Schnittstellen am Werkzeug zu reduzieren. Mit anderen Worten: Im Einzelfall kann diese Massnahme zu einer Verringerung des zerspanten Volumens und damit zu einer Verringerung des Staubanteils führen.

Fig. 3 zeigt ein weiteres Ausführungsbeispiel, welches sich dadurch auszeichnet, dass die Spanabfuhrnut 12 durch eine Lücke 12a vertieft ist. Diese Ausbildung ist deshalb möglich, weil der Stützeffekt des dünneren Drahtes 10 so gut ist, dass eine ununterbrochene äussere Wickellage nicht benötigt wird, auch wenn wegen der grossen Anzahl der Drähte in dem Kernseil deren Unregelmässigkeit nicht allzu gross ist. (Die bei 15 in Fig. 1 dargestellte Unregelmässigkeit macht sich bei dickeren Drähten stärker bemerkbar als bei dünneren Drähten. Im Bereich dieser unregelmässigen Stellen 15 ist die Abstützung der äusseren Wickellage am Kernseil 1 besonders gut.) Die vertieften Nuten gemäss Fig. 3 führen zu einem relativ erhöhten Schneideffekt, wenn man Drähte gleichen Durchmessers betrachtet, oder es können besonders dünne Drähte verwendet werden, wenn man den Schneideffekt nicht steigern will. Je dünner die Drähte, umso geringer ist der Staubanfall. Die gemäss Fig. 3 konstruierte Seilsäge ist deshalb besonders vorteilhaft.

Ein bevorzugter Bereich für die Breite der Lükken 12a beträgt 0,5 bis 1 mm.

**Patentansprüche**

1. Endlose Seilsäge zum Schneiden von Kunststoff, insbesondere als Schaumstoff, mit einem biegsamen endlosen Seil (1) als Kern und mit einer Wendel als schneidendem Element, die einen schraubenförmig um den Kern gelegten Draht (11) enthält, dadurch gekennzeichnet, dass die Wendel aus nebeneinander gelegten, dickeren und dünneren Drähten (10, 11 und ggf. 13) besteht, wobei der jeweils dickere Draht (11) von dem jeweils in Schneidrichtung nachfolgenden dünneren Draht (10) gestützt wird und zwischen den dickeren Drahtschrauben (10) schraubenförmig verlaufende Spanabfuhrnuten (12) verbleiben.

2. Endlose Seilsäge nach Anspruch 1, dadurch gekennzeichnet, dass die Spanabfuhrnut (12) eine bis zum Kernseil (1) reichende Lücke (12a) zwischen den Drahtschrauben aufweist.

3. Endlose Seilsäge nach Anspruch 1 oder 2, dadurch gekennzeichnet, dass ein dickerer Draht (11) und ein dünnerer Draht (10) in der Wickellage um das Kernseil (1) einander abwechseln.

4. Endlose Seilsäge nach Anspruch 1 oder 2, dadurch gekennzeichnet, dass ein dickerer Draht (11) und mehrere dünnere Drähte (10, 13) in der Wickellage um das Kernseil (1) einander abwechseln.

5. Endlose Seilsäge nach Anspruch 1 oder 2, dadurch gekennzeichnet, dass zwei oder mehrere dickere Drähte (11) nebeneinander und zwei oder mehrere dünnere Drähte (10, 13) nebeneinander in der Wickellage um das Kernseil (1) als Gruppen abwechseln.

6. Endlose Seilsäge nach einem der Ansprüche 1-5, dadurch gekennzeichnet, dass der Kern aus einem endlosen, unregelmässig geschlagenen Seil (1) unter Verwendung von dünnen Draht (2 bis 8) besteht, der sich als dünnerer Drakt (10) in der äusseren, gewickelten Wendel fortsetzt, und dass die Drahtenden (10a, 11a bzw. 13a) der äusseren Wickellage mit dem Kernseil (1) verlötet sind.

7. Endlose Seilsäge nach Anspruch 6, dadurch gekennzeichnet, dass die Drähte (2 bis 8) des Kernseils (1) und der äusseren Wendel (10, 11, 13) identisch sind.

8. Endlose Seilsäge nach einem der Ansprüche 1-7, dadurch gekennzeichnet, dass für den dünneren Draht (10, 13) ein runder Querschnitt mit einem Durchmesser zwischen 0,05 und 0,12 mm und für den dickeren Draht (11) ein runder Querschnitt mit einem Durchmesser zwischen 0,12 und 0,3 mm gewählt sind.

9. Endlose Seilsäge nach Anspruch 8, dadurch gekennzeichnet, dass der dünnere Draht (10, 13) im Bereich zwischen 0,08 und 0,12 mm und der dickere Draht (11) im Bereich zwischen 0,12 und 0,18 mm Durchmesser liegt.

10. Endlose Seilsäge nach Anspruch 8 oder 9, dadurch gekennzeichnet, dass das endlose Kernseil (1) in einem Querschnitt von etwa 0,5 bis 0,8 mm 15 bis 30 Drähte (2 bis 8) umfasst.

**Claims**

1. An endless-wire saw for cutting plastics, more particularly foam plastics, comprising a flexible endless wire (1) as a core and a cutting element in the form of a coil comprising a wire (11) wound helically around the core, characterised in that the coil consists of contiguous thicker and thinner wires (10, 11, and, where applicable, 13), each thicker wire (11) being supported by the next thinner wire (10) in the cutting direction, helical chip removal grooves (12) being left between the thicker wire helixes (10).

2. An endless-wire saw according to Claim 1, characterised in that the chip removal groove (12) has a gap (12a) between the wire helixes, said gap extending as far as the core wire (1).

3. An endless-wire saw according to Claim 1 or 2, characterised in that a thicker wire (11) and a thiner wire (10) alternate in the layer wound around the core wire (1).

4. An endless-wire saw according to Claim 1 or 2, characterised in that a thicker wire (11) and a plurality of thinner wires (10, 13) alternate in the layer wound around the core wire (1).

5. An endless-wire saw according to Claim 1 or 2, characterised in that two or more thicker wires (11) side by side and two or more thinner wires (10, 13) side by side alternate as groups in the layer wound around the core wire (1).

6. An endless-wire saw according to any one of Claims 1 to 5, characterised in that the core consists of an endless irregularly laid wire (1) using thin wire (2-8), continuing in the form of thinner wire (10) in the outer wound coil, and the wire ends (10, 11a and 13a) of the outer wound layer are soldered to the core wire (1).

7. An endless-wire saw according to Claim 6, characterised in that the wires (2-8) of the core wire (1) and the outer coil (10, 11, 13) are identical.

8. An endless-wire saw according to any one of Claims 1 to 7, characterised in that a round cross-section with a diameter of between 0.05 and 0.12 mm is used for the thinner wire (10, 13) and a round-cross-section with a diameter of between 0.12 and 0.3 mm is used for the thicker wire (11).

9. An endless-wire saw according to Claim 8, characterised in that the thinner wire (10, 13) is in the diameter range between 0.08 and 0.12 mm and the thicker wire (11) is in the diameter range of between 0.12 and 0.18 mm.

10. An endless-wire saw according to Claim 8 or 9, characterised in that the endless core wire (1) contains 15 to 30 wires (2-8) in a cross-section from about 0.5 to 0.8 mm.

**Revendications**

1. Scie à câble sans fin pour couper une matière plastique, notamment une mousse, avec un câble (1) sans fin, souple, comme âme et avec un boudin comme élément de coupe qui contient un fil d'acier (11) placé en hélice autour de l'âme, caractérisée en ce que le boudin est constitué par des fils épais et des fils minces (10, 11, et éventuellement 13) placés à côté les uns des autres, le fil épais (11) étant soutenu par le fil mince (10) qui lui fait suite dans le sens de coupe, et des rainures d'évacuation de copeaux (12) de forme hélicoïdale subsistant entre les spires des fils épais (10).

2. Scie à câble sans fin selon la revendication 1, caractérisée en ce que la rainure d'évacuation de copeaux (12) comporte entre les spires de fil une lacune (12a) s'étendant jusqu'au câble d'âme (1).

3. Scie à câble sans fin selon la revendication 1 ou 2, caractérisée en ce qu'un gros fil (11) et un fil mince (10) alternent entre eux dans la couche d'enroulement autour du câble d'âme (1).

4. Scie à câble sans fin selon la revendication 1 ou 2, caractérisée en ce qu'un gros fil (11) et plusieurs fils minces (10, 13) alternent entre eux dans la couche d'enroulement autour du câble d'âme (1).

5. Scie à câble sans fin selon la revendication 1 ou 2, caractérisée en ce que deux ou plusieurs gros fils (11) juxtaposés et deux ou plusieurs fils minces (10, 13) juxtaposés alternent en groupes dans la couche d'enroulement autour du câble d'âme (1).

6. Scie à câble sans fin selon une quelconque des revendications 1 à 5, caractérisée en ce que l'âme est constituée par un câble (1) sans fin à commettage irrégulier en utilisant du fil mince (2 à 8) qui se poursuit en formant un fil mince (10) dans le boudin enroulé extérieur et que les extrémités de fil (10a, 11a, 13a) de la couche d'enroulement extérieure sont fixées par brasage au câble d'âme (1).

7. Scie à câble sans fin selon la revendication 6, caractérisée en ce que les fils (2 à 8) du câble d'âme (1) et du boudin extérieur (10, 11, 13) sont identiques.

8. Scie à câble sans fin selon une quelconque des revendications 1 à 7, caractérisée en ce qu'on choisit pour le fil mince (10, 13) une section transversale circulaire avec un diamètre compris entre 0,05 et 0,12 mm et pour le gros fil (11) une section transversale circulaire avec un diamètre compris entre 0,12 et 0,3 mm.

9. Scie à câble sans fin selon la revendication 8, caractérisée en ce que le fil mince (10, 13) a un diamètre compris entre 0,08 et 0,12 mm et le gros fil (11) un diamètre compris entre 0,12 et 0,18 mm.

10. Scie à câble selon la revendication 8 ou 9, caractérisée en ce que le câble d'âme (1) sans fin contient dans la section transversale 15 à 30 fils (2 à 8) dont le diamètre est d'environ 0,5 à 0,8 mm.

Fig 1

Fig 2

Fig 3